# EUROPEAN PATENT SPECIFICATION

(11) **EP 0 427 960 B1**
(45) Date of publication and mention of the grant of the patent: **26.01.1994**
(21) Application number: 90119469.6
(22) Date of filing: 11.10.1990
(51) Int. Cl.: C03C 8/02, C23D 5/04

(54) **Glazed metal pipe and method for its manufacture**
Glasiertes Metallrohr und Verfahren zu dessen Herstellung
Tuyau métallique glacé et procédé pour sa production

(30) Priority: 17.10.1989 CN 89107856
(43) Date of publication of application: 22.05.1991
(73) Proprietor: Wang, Liquan, Beijing (CN); Yasunari, Horiuchi, Kumamoto (JP)
(72) Inventor: Wang, Liquan, Beijing (CN); Yasunari, Horiuchi, Kumamoto (JP)
(74) Representative: Liesegang, Roland, Dr.-Ing.

(56) References cited:
- EP-A- 0 049 041
- DE-A- 1 496 482
- US-A- 2 414 633
- CHEMICAL ABSTRACTS, vol. 99, no. 2, 11 July 1983 Columbus, Ohio, USA page 239; ref. no. 9759F & JP-A-58015043 (MATSUSHITA) (28-01-1983)
- SOVIET INVENTIONS ILLUSTRATED, Section Ch, week 8823, 09-06-1988, no.159649/23 Derwent Publications Ltd., London GB & SU-A-1350128 (PIPE IND RES INST) (07-11-1987)

## Description

The present invention relates to composite pipe possessing excellent anticorrosive performance and long lifetime, and in particular, to employing a hotspraying technique for preparing metal-glass (glaze) hotspraying composite pipe for the purpose of petroleum, chemical engineering, medical and dye material industrial application or for the purpose of oil transportation, water supply, gas supply as well as underground or submarine anticorrosive tube usage.

### Description of the Prior Art.

For the time being, the main method for the tube anticorrosion in China makes use of hot bitumen or tar, which was also mainly used in the major industrialized countries until recently. The life time of bitumen generally does not exceed ten years and in the region suffering from heavy corrosion, said lifetime does not exceed even 5-7 years. There exist many drawbacks of such kind of anticorrosive coating materials. e.g., the deformation rate limit is small, there arises dripping flow at elevated temperatures to damage the anticorrosive layer, the base produced at cathode protection will do harm to the adhesive force of the base painting, microorganism can make erosion or damage thereon etc.. Therefore, the weak point of the piping anticorrosive layer has to run the risk to be damaged at all times; this not only needs paying a big sum of maintenance fee, but also results in a surprising economic loss due to repairing and servicing and pipings and interrupting the fluid transportation.

In recent years, the epoxy powder spraying method is widely used for tube anticorrosion in a lot of countries. In West Germany, poly-ethylene powder coating material is employed for 90% of the anticorrosive sphere with respect to gas piping as well as water supply piping. Epoxy powder coating material is widely used in the western Europe and the United States of America. Since 1985, Chinese Academy of piping Research has successfully experimented the epoxy powder spraying pipes and has commercialized them step by step. Such steel-plastic composite pipes have a longer lifetime than the bitumen coating layer as it has raised the deformation rate limit so that no serious deformation will take place, nor will dripping bring forth damages. However, it is after all an organic material as is bitumen, assuming unconquerable deficiencies, that is, the ageing problem of the coating layer. Along with the lapse of time, the rise and fall of temperature, the influence of the air humidity as well as of the acid, base, salt and water in the soil, the ageing thereof will speed up. The ageing limit of both polyethylene and epoxy coating materials will scarcely exceed 20 years.

EP-0154513 (publication number) relates to glass compositions which are suitable for bonding to alloys, in particular "Vitallium" (Trade mark) alloys. Its use is limited to the implant tube of surgical operations.

According to JP 60-273448, powder glass spheres can be carried by a gas having a certain velocity to be sprayed onto the surface of the base material wherein these powder spheres are in the form of molten film and adhere onto said surface, the operational temperature thereof is 700-800°C and its use is limited only to insulating material and fabrics.

The above prior art relates to glass being sprayed onto the base material to form composite material, but not to inorganic material to be coated onto for the anticorrosive purpose.

Therefore, it is necessary to provide a kind of tube which can eliminate the ageing drawbacks of the present organic anticorrosive coating layer, best improve the anticorrosive performance of the pipings and significantly lengthen their operational lifetime.

The object of the present invention is to provide a kind of metal-inorganic material composite piping to replace the existing metal-organic material composite pipe. According to the present invention, a metal-glass (glaze) composite pipe is prepared using flat nozzle gun as well as special set equipments to hot-spray the specially prepared glass (glaze) coating material onto the surface of common metal piping as a glass (glaze) coating layer.

### Brief Description of the Drawings

Fig. 1 is a sectional view of the nozzle for the hot-spray gun.

Fig. 2 is a flow chart schematic model of the hot spraying.

Fig. 3 is a sectional view of the hot-spray operation for the spray gun.

As is well known, chemical porcelain enamel is an inorganic material with anticorrosive performance. For the time being, enamel products are all produced by calcination in furnace, thus super long pipes can hardly be prepared.

The metal-glass (glaze) pipe or product provided by the present invention is not prepared by calcination in specially dimensioned furnace, but formed by means of hot spraying. Therefore, the process provided by the present invention can produce superlong pipes, best comparable with the chemical enamel, and the equipments used in the present process can be moved to the very construction site for fixing up the pipes.

In order to embody the present invention, the present patent application shows the composition of the hot spraying glaze, the structure of the spray gun, the special equipment system for hot spraying as well as the hot spraying process and procedures.

Experiments prove that MoO₃ can significantly improve formability of the potential glass undeveloped in the multi-element system glass, meanwhile tungsten and molybdenum also do contributions to the chemical stability of glass. They not only are helpful for the melting thereof, but also have positive effect on the brightness of the surface of the sprayed products. Together with a base glaze MoO₃ and WO₃ can form readily molten compound--molybdate and tungstate which can react to a certain extent with the metal interface in the course of hot spraying. For example, when Barium molybdate is used as the base glaze of the enamel chinaware, the adhesive force of the porcelain glaze onto metal can be improved.

MoO₃ and WO₃ are also surfactants of glass which can reduce the viscosity of glass and improve the wetting ability of glass onto metal.

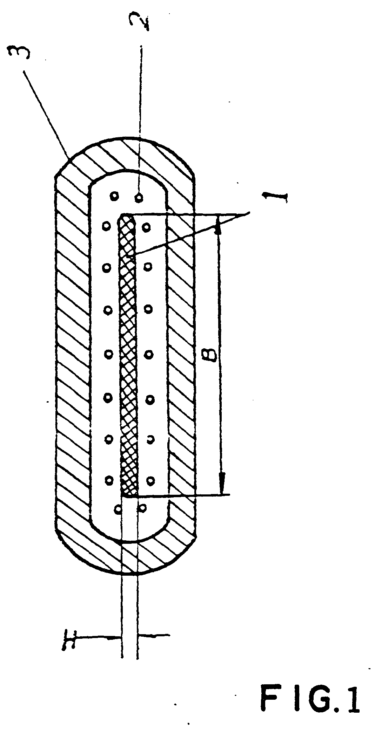

The nozzle of metal powder spray gun used in the prior art takes a round shape while the nozzle of the gun in the present invention is flat as shown in Fig. 1. The heigh H of the nozzle (1) is smaller than the width B; the hole around the nozzle is the so-called gas orifice (2) which injects a gaseous mixture of ethene and oxygen, giving rise to flames and melting the starting material; the outermost layer is the radiating fin (3).

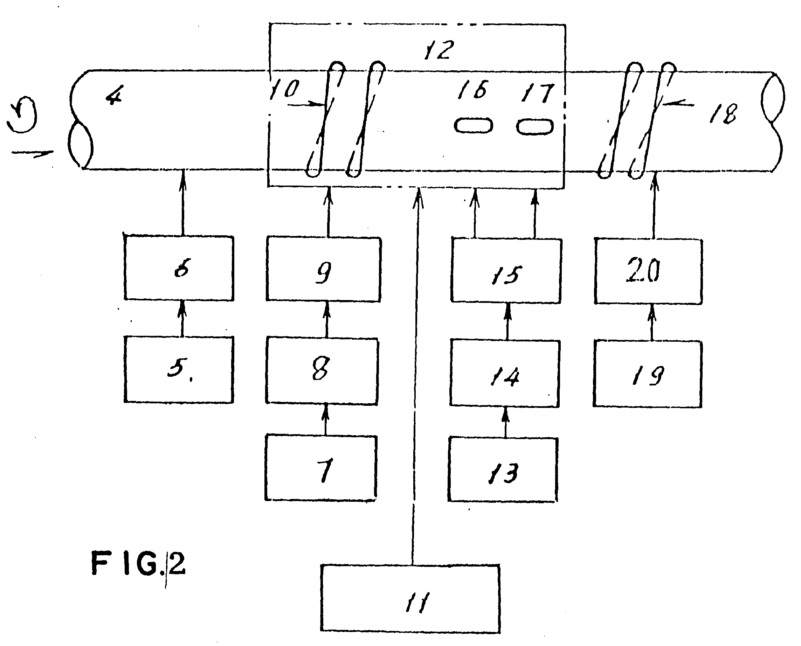

The hot spraying technique of the present invention is as shown in Fig. 2. The spraying equipment system is divided into six parts: (I) piping transportation system; (II) pipe-derusting system; (III) pipe preheating system; (IV) pipe nitrogen protecting system; (V) hot spraying system; (VI) heating and sealing system.

There are two simultaneous motions of the pipe (4) being sprayed during the entire hot spraying operation; one is to rotate about the axis, the other is to move along the axial direction. Before spraying the pipe, it is necessary to use the air compressor (5) and the sand-blower (6) to remove rust. Diesel generator (7) is used to supply the frequency convertor (intermediate frequency generating unit) (8) and the pipe is preheated (9) by the induction heating coil (10) twisting around the pipe preheating region. Nitrogen produced by nitrogen generator (11) is introduced into the nitrogen protective cover (12) such that the preheating region and the glaze spray region on the pipe can be well protected to avoid the pipe being oxidized at high temperature. During spraying, ethene and oxygen are used as combustion gas (13) which together with glaze is fed respectively to the two spray guns (14). These two guns are disposed in parallel along the axial direction to carry out the two-layer spray, first to spray the under-glaze layer (16), then to spray the over-glaze layer (17). After the spraying is completed, the pipe enters the high frequency heating region (18) such that the micropores on the glaze-sprayed face be well sealed up to guarantee the spraying quality. Then, the converter (high frequency generating unit) (19) and the high frequency induction heating coil (18) are used to heat (20) the pipe. And now the entire spray coating operation comes to an end.

The above spraying operation is suitable for the spraycoating of the outer face of the pipes; for the spraying of the inner surfaces of the pipes, a specially made spray gun should be utilized with the pipe rotationally inclining to a certain degree.

The preheatment temperature of the pipe is generally 300-750°C, preferably 700°C. If the converter (8) is used for heating, an ideal temperature field for spray coating can be provided.

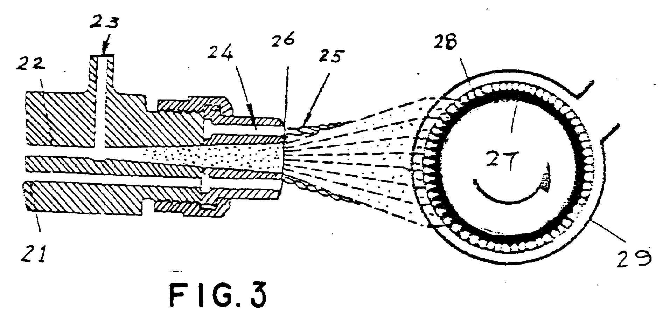

Fig. 3 illustrates work process of hot-spraying said glass (glaze) onto the metal pipe. The spray gun with flat nozzle as shown in Fig. 1 is used as the hot-spraying tool. Ethene (21) and oxygen (22) as well as the powdery material (23) shown in Table I are fed into the gun simultaneously. Igniting is carried out at the gas orifice (24) and the nozzle (26) with the temperature being in the range of 1400-3000°C. The powdery material is heated in the flame (25) and melted into liquid drops, uniformly being injected towards the rotating surface of the metal pipe (27) which is horizontally moving at the same time, thus, a glass (glaze) coating layer (28) is formed with the under-glaze having a preferable thickness of 0.2-0.4 mm and the overglaze having a preferable thickness of 0.3-0.6 mm.

The thickness of the under-glaze on the surface of the metal pipe is generally 0.05-2.0 mm, preferably 0.2-0.4 mm; the thickness of the over-glaze is generally 0.05-3.0 mm, preferably 0.3-0.6 mm; the total thickness of the two glaze layers is 0.1-5.0 mm, and preferably 0.5-1.0 mm.

After completing the spraying, it is still necessary to be heated by high frequency induction heater, the temperature should be maintained at 600-850°C, preferably 750°C; which can eliminate the micropores on the coating and guarantee the quality of the resultant composite pipe.

The test results of the physical and chemical performances of the product in the present invention are listed in Table 2, which are provided by the chemistry Department, Qinghua University. It can be seen that the composite pipe of the present invention possesses remarkable anticorrosive performance such as fluorin -corrosion resistance, alkali resistance, acid resistance, salt tolerance etc. and mechanical strength such as shock-resistance, thermal shock resistance, etc... Operational temperature may reach as high as 300°C (the maximum operational temperature of the organic coating layer is between 60-100°C). It is especially worthwhile to note that the adhesive performance of the glaze layer is rather excellent. For example, the glaze will not rupture or strip after being hit by a steel ball for even ten times: though the over-glaze will be stripped off after a test of the hammer strike on the glaze surface, the under-glaze keeps thence still normal.

Commonly, the metal material has high strength but low anticorrosion ability; glass has good anticorrosion ability but low strength. These two advantages are well combined by means of the hot spraying technique, it means, the metal pipe possesses the anticorrosive ability of glass. Such a coating formed by glass (glaze) will not be ageing within one hundred years (even for a longer period of time).

The technique provided by the present invention can also be used for hot-spraying the coating of various colors and various patterns onto metal substrate to manufacture metal-colored glass (glaze) composite product used as marks of permanent building, tablet, billboard, road sign and street nameplate etc..

In order to promote the development of the piping industry and to satisfy the characteristics or demands in different countries, the inventor has further developed such production in the fixed factories into production carried out in mobile factories; and the various required special equipments are incorporated into a mobile tool car for further production; where is construction task, there will be such mobile factory. In this way, the pipe production and the pipe application can be well incorporated as a whole.

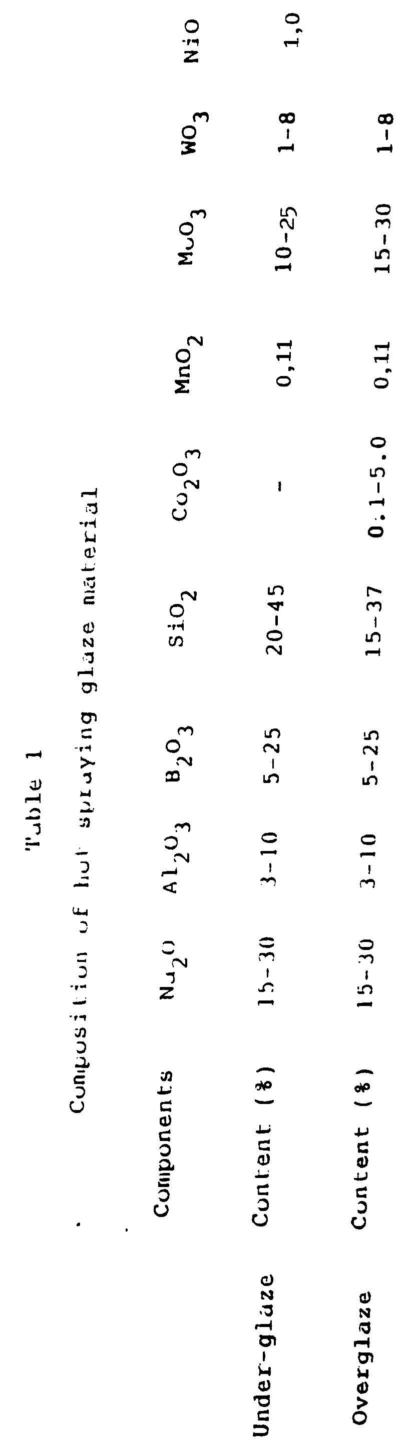

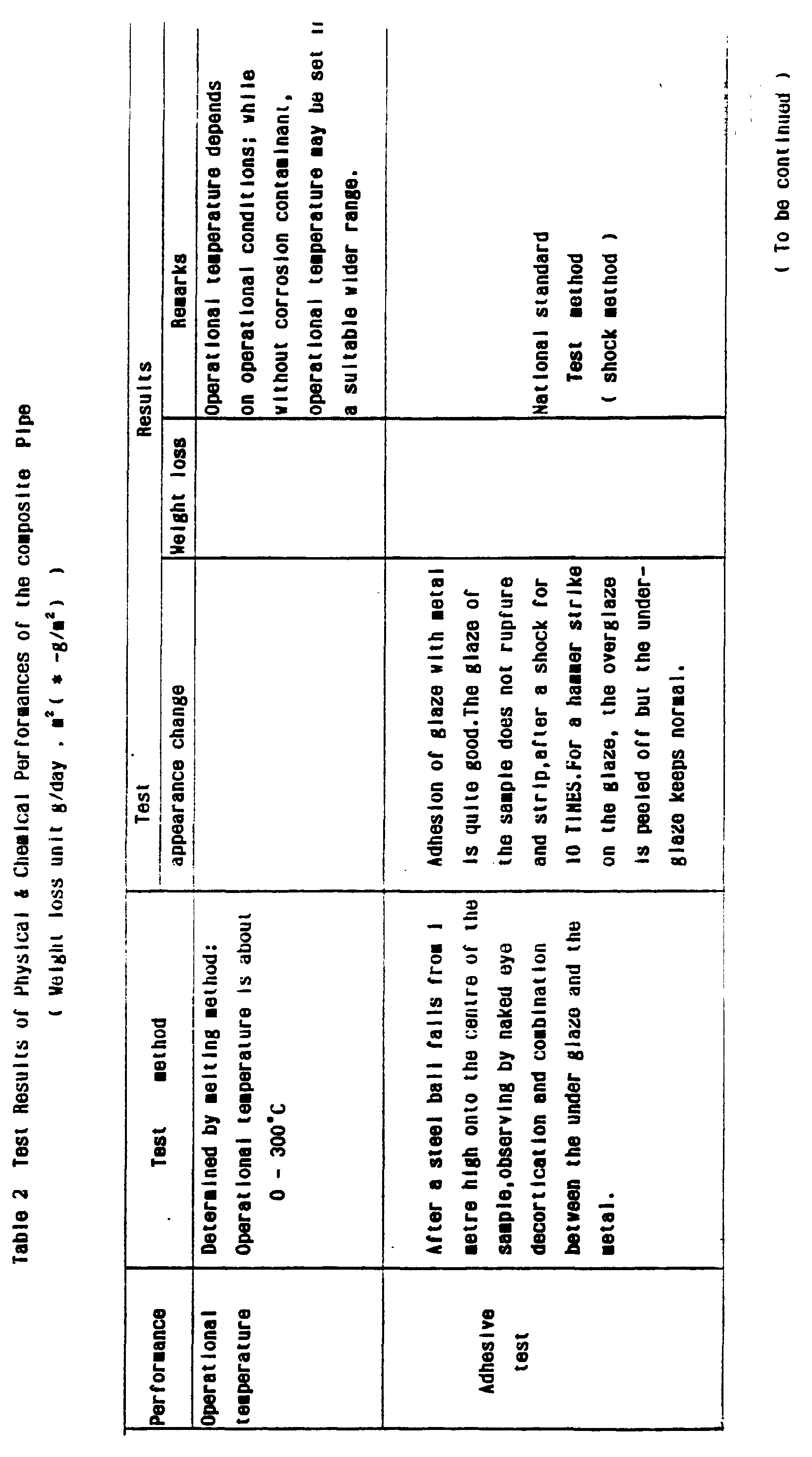

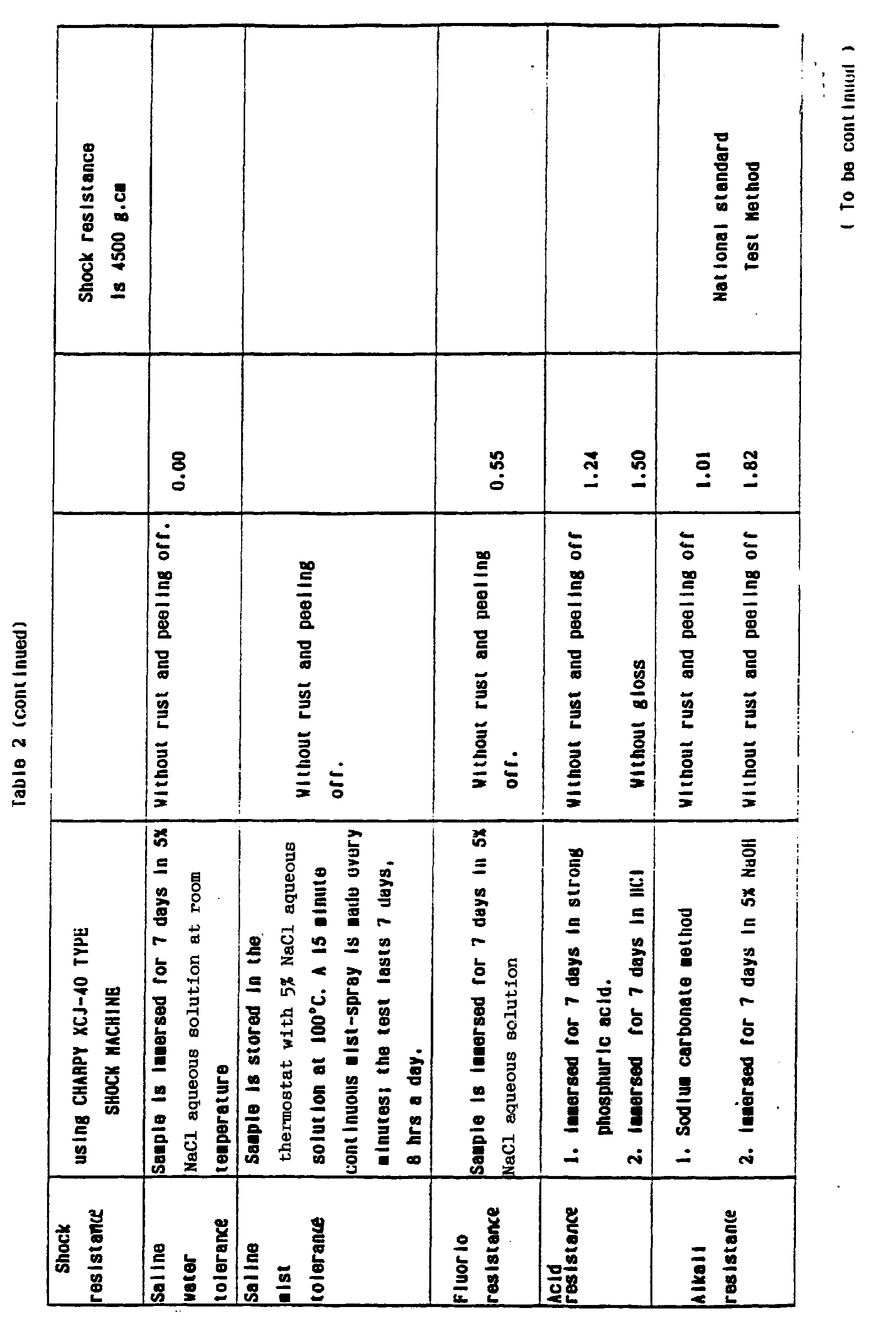

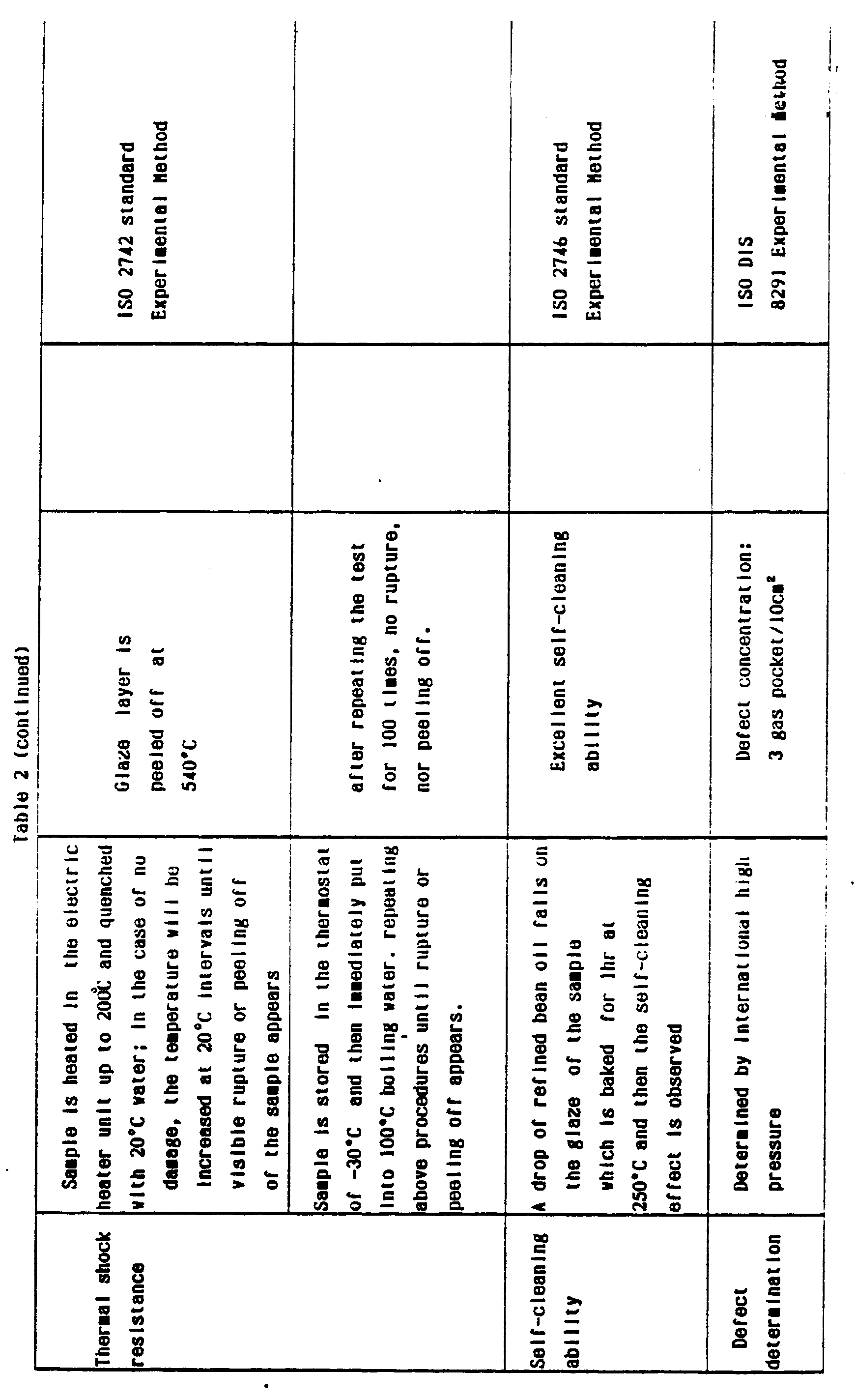

## Claims

1. A metal-glass (glaze) composite pipe which comprises an ordinary metal pipe and at least one glass (glaze) coating layer sprayed onto the surface of said pipe and having the following composition:
Na₂O 15-30% (wt)
Al₂O₃ 3-10% (wt)
B₂O₃ 5-25% (wt)
SiO₂ 15-45% (wt)
MnO₂ 0.11% (wt)
MoO₃ 10-35% (wt)
and optionally containing 1,0% NiO and/or 1-8% WO₃ .

2. The pipe according to claim 1,
**characterized** in that said glass (glaze) coating layer is composed of two layers, namely an under-glaze layer and an over-glaze layer, the under-glaze layer having a thickness of 0.05-2.00mm and the over-glaze layer having a thickness of 0.05-3.00mm, the total thickness of the glaze layer being 0.1-5.00mm.

3. The pipe according to claim 1 or 2,
**characterized** in that an under-glaze layer is provided, which has the following composition:
Na₂O 15-30% (wt)
Al₂O₃ 3-10% (wt)
B₂O₃ 5-15% (wt)
SiO_{Q} 20-45% (wt)
MnO₂ 0.11% (wt)
MoO₃ 10-25% (wt)
WO₃ 1-8% (wt)
NiO 1.0% (wt)
and in that an over-glaze layer is provided, which has the following composition:
Na₂O 15-30% (wt)
Al₂O₃ 3-10% (wt)
B₂O₃ 5-25% (wt)
SiO₂ 15-37% (wt)
Co₂O₃ 0.1-5.0% (wt)
MnO₂ 0.11% (wt)
MoO₃ 15-35% (wt)
WO₃ 1-8% (wt)

4. A process for preparing the metal-glass (glaze) composite pipe as indicated in one of claims 1 to 3, **characterized** in that during the spraying operation the pipe (4) is rotated about its axis and simultaneously is moved along its axial direction.

5. The process of claim 4, **characterized** in that before spraying rust is removed from said pipe (4) by means of a sand blower (6).

6. The process of one of claims 4 or 5,
**characterized** in that before spraying the pipe is preheated (9) by an induction heating coil (10), which is twisted around a pipe preheating region, to temperatures in the range of 300-750°C.

7. The process of claim 6, **characterized** in that Nitrogen is introduced into a nitrogen protective cover (12) surrounding the pipe preheating region such that the preheating region and the glaze spraying region of the pipe are protected to avoid oxidation of the pipe at high temperatures.

8. The process of one of claims 4 to 7, **characterized** in that ethene and oxygen are used as combustion gases (13) which are fed together with the respective glazes to two spray guns (14) axially disposed in parallel for firstly to spray the under-glaze (16) and secondly to spray the over-glaze (17) at high temperatures of the spraying flame, which are preferably in the range of 1400 to 3000°C.

9. The process of one of claims 4 to 8, **characterized** in that the pipe (4) after spraying enters a high frequency heating region (18), where it is heated by means of a high frequency induction heating coil (18), preferably at temperatures in the range of 600-850°C.

10. The process according to claim 4,
**characterized** in that the spray nozzle of the spray gun is flat, having a height H smaller than its width B.

## Patentansprüche

1. Metallglas (Glasur) - Verbundrohr, welches ein gewöhnliches Metallrohr und wenigstens eine Glas (Glasur) - Überzugsschicht aufweist, die auf die Oberfläche des Rohres gesprüht ist und die folgende Zusammensetzung hat:
Na₂O 15 - 30% (Gew.)
Al₂O₃ 3 - 10% (Gew.)
B₂O₃ 5 - 25% (Gew.)
SiO₂ 15 - 45% (Gew.)
MnO₂ 0,11% (Gew.)
MoO₃ 10 - 35% (Gew.)
und wahlweise 1,0% NiO und/oder 1 - 8% WO₃ enthält.

2. Rohr nach Anspruch 1, **dadurch gekennzeichnet,** daß die Glas (Glasur) - Überzugsschicht aus zwei Schichten zusammengesetzt ist, nämlich einer Unterglasurschicht und einer Oberglasurschicht, wobei die Unterglasurschicht eine Dicke von 0,05 - 2,00 mm hat und die Oberglasurschicht eine Dicke von 0,05 bis 3,00 mm hat, wobei die Gesamtdicke der Glasurschicht 0,1 bis 5,00 mm ist.

3. Rohr nach Anspruch 1 oder 2, dadurch gekennzeichnet, daß eine Unterglasurschicht vorgesehen ist, welche die folgende Zusammensetzung hat:
Na₂O 15 - 30% (Gew.)
Al₂O₃ 3 - 10% (Gew.)
B₂O₃ 5 - 15% (Gew.)
SiO₂ 20 - 45% (Gew.)
MnO₂ 0,11% (Gew.)
MoO₃ 10 - 25% (Gew.)
WO₃ 1 - 8% (Gew.)
NiO 1,0% (Gew.),
und daß eine Oberglasurschicht vorgesehen ist, welche die folgende Zusammensetzung hat:
Na₂O 15 - 30% (Gew.)
Al₂O₃ 3 - 10% (Gew.)
B₂O₃ 5 - 25% (Gew.)
SiO₂ 15 - 37% (Gew.)
Co₂O₃ 0,1 - 5,0% (Gew.)
MnO₂ 0,11% (Gew.)
MoO₃ 15 - 35% (Gew.)
WO₃ 1 - 8% (Gew.).

4. Verfahren zum Herstellen des Metallglas (Glasur) - Verbundrohres wie in einem der Ansprüche 1 bis 3 angegeben, dadurch gekennzeichnet, daß während des Sprühbetriebes das Rohr (4) um seine Achse gedreht wird und gleichzeitig entlang seiner axialen Richtung bewegt wird.

5. Verfahren nach Anspruch 4, dadurch gekennzeichnet, daß vor dem Sprühen Rost von dem Rohr (4) mittels eines Sandstrahlers (6) entfernt wird.

6. Verfahren nach einem der Ansprüche 4 oder 5, dadurch gekennzeichnet, daß vor dem Sprühen das Rohr durch eine Induktionsheizspule (10), die um einen Rohrvorheizbereich gewickelt ist, auf Temperaturen in dem Bereich von 300 - 750°C vorgeheizt (9) wird.

7. Verfahren nach Anspruch 6, dadurch gekennzeichnet, daß Stickstoff in eine Stickstoff-Schutzabdeckung (12) eingeführt wird, die den Rohrvorheizbereich umgibt, so daß der Vorheizbereich und der Glasursprühbereich des Rohres geschützt sind, um Oxidation des Rohres bei hohen Temperaturen zu verhindern.

8. Verfahren nach einem der Ansprüche 4 bis 7, dadurch gekennzeichnet, daß Äthylen und Sauerstoff als Brenngase (13) verwendet werden, die zusammen mit den jeweiligen Glasuren zwei Sprühpistolen (14) zugeführt werden, welche axial und parallel angeordnet sind, um erstens die Unterglasur (16) zu sprühen und zweitens die Oberglasur (17) bei hohen Temperaturen der Sprühflamme, die bevorzugt in dem Bereich von 1400 bis 3000°C liegen, zu sprühen.

9. Verfahren nach einem der Ansprüche 4 bis 8, dadurch gekennzeichnet, daß das Rohr (4) nach dem Sprühen in einen Hochfrequenz-Heizbereich (18) eintritt, wo es mittels einer Hochfrequenz-Induktionsheizspule (18) erhitzt wird, bevorzugt auf Temperaturen in dem Bereich von 600 - 850°C.

10. Verfahren nach Anspruch 4, dadurch gekennzeichnet, daß die Sprühdüse der Sprühpistole flach ist, mit einer Höhe H, die geringer ist als ihre Breite B.

## Revendications

1. Tuyau composite métal-verre (émail) comprenant un tuyau de métal ordinaire et au moins une couche de revêtement de verre (émail) pulvérisée sur la surface du tuyau et ayant la composition pondérale suivante :
Na₂O 15-30 %
Al₂O₃ 3-10 %
B₂O₃ 5-25 %
SiO₂ 15-45 %
MnO₂ 0,11 %
MoO₃ 10-35 %
et contenant optionnellement 1,0 % de NiO et ou 1 à 8 % de WO₃.

2. Tuyau selon la revendication 1, caractérisé en ce que la couche de revêtement de verre (émail) est constituée de deux couches, à savoir une sous-couche d'émail et une sur-couche d'émail, la sous-couche d'émail ayant une épaisseur de 0,05 à 2,00 mm et la sur-couche d'émail ayant une épaisseur de 0,05 à 3,00 mm, l'épaisseur totale de la couche d'émail étant de 0,1 à 5,00 mm.

3. Tuyau selon la revendication 1 ou 2, caractérisé en ce qu'une sous-couche est prévue et a la composition pondérale suivante :
Na₂O 15-30 %
Al₂O₃ 3-10 %
B₂O₃ 5-15 %
SiO₂ 20-45 %
MnO₂ 0,11 %
MoO₃ 10-25 %
WO₃ 1-8 %
NiO 1,0 %
et en ce qu'une sur-couche d'émail est prévue et a la canposition pondérale suivante :
Na₂O 15-30 %
Al₂O₃ 3-10 %
B₂O₃ 5-25 %
SiO₂ 15-37 %
Co₂O₃ 0,1-5,0 %
MnO₂ 0,11 %
MoO₃ 15-35 %
WO₃ 1-8 %

4. Procédé de préparation d'un tuyau composite métal-verre (émail) selon l'une quelconque des revendications 1 à 3, caractérisé en ce que, pendant l'opération de pulvérisation, le tuyau (4) est amené à tourner sur son axe et est simultanément déplacé selon sa direction axiale.

5. Procédé selon la revendication 4, caractérisé en ce que, avant pulvérisation, la rouille est enlevée du tuyau (4) par une sableuse (6).

6. Procédé selon l'une des revendications 4 ou 5, caractérisé en ce que, avant pulvérisation, le tuyau est préchauffé (9) par une bobine de chauffage à induction (10) qui est enroulée autour d'une région de préchauffage du tuyau à des températures dans une plage de 300 à 750°C.

7. Procédé selon la revendication 6, caractérisé en ce que de l'azote est introduit dans une enceinte de protection d'azote (12) entourant la région de préchauffage du tuyau de sorte que la région de préchauffage et la région de pulvérisation d'émail du tuyau sont protégées pour éviter une oxydation du tuyau à haute température.

8. Procédé selon l'une quelconque des revendications 4 à 7, caractérisé en ce que de l'éthène et de l'oxygène sont utilisés comme gaz de combustion (13) et sont fournis avec les émaux respectifs à deux pistolets de pulvérisation (14) disposés axialement et en parallèle pour pulvériser d'abord la sous-couche (16) et pour pulvériser ensuite la sur-couche (17) aux hautes températures de la flamme de pulvérisation qui sont de préférence dans la plage de 1400 à 3000°C.

9. Procédé selon l'une quelconque des revendications 4 à 8, caractérisé en ce que le tuyau (4), après pulvérisation, rentre dans une région de chauffage haute fréquence (18) où il est chauffé par une bobine de chauffage à induction haute fréquence (18), de préférence à des températures comprises dans la plage de 600 à 850°C.

10. Procédé selon la revendication 4, caractérisé en ce que la buse de pulvérisation du pistolet de pulvérisation est plate et a une hauteur H inférieure à sa largeur B.
